# EUROPÄISCHE PATENTSCHRIFT

(11) **EP 0 602 440 B1**
(45) Veröffentlichungstag und Bekanntmachung des Hinweises auf die Patenterteilung: **29.01.1997**
(21) Anmeldenummer: 93119190.2
(22) Anmeldetag: 27.11.1993
(51) Int. Cl.: B60K 15/04

(54) **Verschluss zum Verschliessen der Mündung eines Stutzens**
Closure for closing the orifice of a neck
Fermeture pour obturer un orifice d'un embout

(30) Priorität: 16.12.1992 DE 4242598
(43) Veröffentlichungstag der Anmeldung: 22.06.1994
(73) Patentinhaber: Temtec Fahrzeugtechnik Entwicklungsgesellschaft mbH, D-83064 Raubling (DE)
(72) Erfinder: Kunz, Georg, Dipl.-Ing. (FH), D-83024 Rosenheim (DE); Temmesfeld, Angelika Barbara Maria, D-83064 raubling (DE)
(74) Vertreter: Kehl, Günther, Dipl.-Phys.

(56) Entgegenhaltungen:
- EP-A- 0 608 527
- DE-A- 3 721 049
- RESEARCH DISCLOSURE Nr. 340 , August 1992 , EMSWORTH, GB Seiten 658 - 659 FORNUTO, JOSEPH 'PASSIVE FUEL CAP'

## Beschreibung

Die Erfindung bezieht sich auf einen Verschluß zum Verschließen der Mündung eines Stutzens, mit einem Verschlußteil, das sich von seinem Verschlußsitz durch Verschwenken entfernen läßt.

Ein derartiger Verschluß ist beispielsweise aus der DE-A-37 21 049.1 bekannt. Bekannte Verschlüsse dieser Art weisen in der Regel eine Klappe auf, die "von der Innenseite her" die Mündungsöffnung eines Stutzens, beispielsweise eines Kraftstoffeinfüllstutzens eines Kraftfahrzeuges, schließt. Durch Einfuhrung einer Zapfpistole oder dergleichen kann die Verschlußklappe gegen die Kraft einer Feder in Richtung auf das Innere des Stutzens hin verschwenkt werden. Wenn sich bei einem solchen Verschluß während der Zeit, in der das Verschlußteil auf dem Verschlußsitz sitzt und der Verschluß geschlossen ist, Schmutz, wie beipielsweise Laubreste, Tannennadeln oder dergleichen ansammelt, kann dieser Schmutz beim Aufstoßen der Verschlußklappe in das Innere des Stutzens gelangen. Beim Wiederverschließen gelangen diese Schmutzreste möglicherweise zwischen das Verschlußteil und den Verschlußsitz und verhindern so die dichte Verbindung zwischen den beiden Teilen.

Der Erfindung liegt die Aufgabe zugrunde, einen Verschluß der eingangs genannten Art zu schaffen, bei dem möglichst sichergestellt ist, daß beim Öffnen des Verschlußteiles keine Schmutzteile in das Innere des Stutzens gelangen.

Diese Aufgabe ist durch die Merkmale des Kennzeichenteiles von Anspruch 1 gelöst.

Durch die Maßname gemäß der Erfindung ist die Möglichkeit geschaffen, daß das Verschlußteil den Mündungsrand des Stutzens von der Außenseite her überdecken kann, sodaß die Dichtungsstelle zwischen dem Mündungsrand und dem Verschlußteil vor Verschmutzung geschützt ist. Dadurch, daß das Verschlußteil in der Zwangsführung so geführt wird ist, daß es sich bei der Öffnungsbewegung zunächst anhebt und anschließend seitlich zur Außenseite des Stutzens weggekippt wird, wird Schmutz, der sich eventuell auf dem Verschlußteil angesammelt hat, ebenfalls mit der Kippbewegung zur Seite geworfen. Anders als bei Verschlußklappen nach dem Stand der Technik, die üblicherweise beim Öffnungsvorgang in den Innenraum des Stutzens geschwenkt werden, ist es bei dem erfindungsgemäßen Verschluß nahezu ausgeschossen, daß Schmutz in das Innere des Stutzens oder in den Bereich des Verschlußsitzes gelangt.

Nach einer vorteilhaften Ausführungsform ist die Zwangsführung eine Kulissenführung, die aus zwei komplementären Teilen, nämlich einerseits aus Nuten und andererseits aus in die Nuten eingreifenden Zapfen besteht.

Nach einer weiteren vorteilhaften Ausführungsform der Erfindung ist vorgesehen, daß jede Kulissenführung zwei Nuten aufweist, in die jeweils Führungszapfen eingreifen und daß beide Nuten jeweils einen etwa axial geradlinig verlaufenden Abschnitt und eine der beiden Nuten einen an den axial verlaufenden Abschnitt anschließenden kreisbogenförmigen Abschnitt aufweisen. Eine solche Kulissenführung ermöglicht ein besonders kompakte Bauweise.

Unter herstellungstechnischen Gesichtspunkten ist es besonders vorteilhaft, wenn die beiden genannten Nuten in einer Einfädelungsnut zusammenlaufen, sodaß das komplementäre, die Zapfen aufweisende Teil über diese Einfädelungsnut beim Zusammensetzen des Verschlusses eingeführt werden kann.

Nach einer weiteren vorteilhaften Ausführungsform der Erfindung ist vorgesehen, daß das Verschlußteil eine auf den Verschlußsitz passende Kappe und zwei seitlich an der Kappe angeordnete sich in Axialrichtung erstreckende Streben aufweist, die den Stutzen gabelförmig beidseitig umschließen. Bei dieser Konstruktionsweise kann jeweils ein Teil der Kulissenführung an der Außenwand des Stutzens und das dazu jeweils komplementäre Teil an der zum Stutzen weisenden Innenseite einer jeden Strebe angeordnet werden. Diese Bauweise kommt im besonderen Maße dem Bedürfnis entgegen, derartige Verschlüsse möglichst kompakt und klein zu bauen. Dabei ist es gleichgültig, welches der beiden komplementären Teile an der Außenwand des Stutzens beziehungsweise an der Innenseite der Streben angeordnet ist.

Vorteilhaft ist ferner, wenn an der Strebe oder an den Streben ein Kraftaufnahmeteil angeordnet ist, auf das Kräfte etwa in Axialrichtung zum Schließen und Öffnen des Verschlusses ausübbar sind. An diesem Kraftaufnahmeteil, das beispielsweise ein vorstehender Zapfen ist, kann ein Bügel angelenkt werden, der mit einem Betätigungshebel verbunden ist. Ein solcher Betätigungshebel kann von Hand betätigt werden oder er kann auch in einem Einführkanal so angeordnet werden, daß er durch Einführen einer Zapfpistole oder eines sonstigen Füllgerätes gewissermaßen automatisch betätigt wird.

Nach einer anderen vorteilhaften Ausführungsform ist jedoch vorgesehen, das Kraftaufnahmeteil mit einem axialbeweglichen Außenring zu verbinden. Durch die axiale Bewegung des Außenringes, der den Stutzen umgibt, kann das Verschlußteil in der oben angegebenen Weise bewegt werden, d.h. es wird zunächst angehoben und danach seitlich verschwenkt. Ein solcher Verschluß eignet sich insbesondere für Öl- oder Kühlmittelbehälter, die in der Regel nicht mit einer Zapfpistole aufgefüllt werden. Er kann jedoch auch für andere Zwecke, beispielsweise zum Abdecken einer Diagnoseanschlußsteckdose, Verwendung finden.

Nach einer weiteren vorteilhaften Ausgestaltung der Erfindung ist das Kraftaufnahmeteil als Zapfen ausgebildet, der in eine umlaufende Nut des axial beweglichen Außenringes eingreift.

Wenn der axial bewegliche Außenring Zapfen und die Außenwand des Stutzens eine Schraubkulisse aufweist, derart, daß er sich durch eine Drehung um seine Achse in axialer Richtung verschiebt, kann diese Axialbewegung auf das Kraftaufnahmeteil zum Öffnen und Schließen des Verschlußteiles übertragen werden.

Die Schraubkulisse, die nach der oben genannten Ausführungsform die axiale Verschiebung des Außenringes bewirkt, besteht nach einer vorteilhaften Ausführungsform wiederum aus zwei komplementären Teilen, nämlich einerseits aus Nuten und andererseits aus in die Nuten eingreifenden Zapfen. Vorzugsweise wird dabei das eine Teil der Schraubkulisse an der Außenseite des Stutzens und das dazu komplementäre Teil an der Innenseite des Außenringes angeordnet. Eine Schraubkulisse, die insgesamt aus drei Nuten und drei in die Nuten eingreifende Zapfen besteht, liefert eine ausgezeichnete Führung des Außenringes, der bereits bei einer Drehung um weniger als 90° Grad eine Axialverschiebung erzeugt, die für das sichere Öffnen und Schließen des Verschlußteiles ausreichend ist.

Nach einer anderen Ausführungsform ist die Zwangsführung als Hebelgestänge ausgebildet. Eine Hebelgestänge weist gegenüber einer Kulissenführung eine geringere Reibung auf, beansprucht in der Regel jedoch etwas mehr Platz. Wesentlich ist jedoch, daß mit dem Hebelgestänge ebenfalls die erfindungsgemäße Öffnungsbewegung, nämlich zunächst ein Anheben des Verschlußteiles in etwa axialer Richtung und danach ein seitliches Wegkippen des Verschlußteiles, möglich ist.

Nach einer vorteilhaften Ausführungsform weist das Hebelgestänge zwei Drehachsen auf, deren erste ein ortsfestes Lager des Hebelgestänges darstellt und seitlich im Abstand zu dem Stutzen liegt und deren zweite den Drehpunkt des Verschlußteiles darstellt und diametral durch den Stutzen verläuft, derart, daß ein Verschwenken des Hebelgestänges um die erste Drehachse ein näherungsweises axiales Anheben des Verschlußteiles und ein Verschwenken des Verschlußteiles um die zweite Achse ein seitliches Wegkippen des Verschlußteiles zur Außenseite des Stutzens bewirkt.

Um die beiden Bewegungsphasen des Anhebens und Wegkippens vollständig zu trennen, ist nach einer weiteren vorteilhaften Ausführungsform vorgesehen, daß die Drehbewegung um die erste Drehachse durch einen Anschlag begrenzt ist. Wenn darüberhinaus eine Vorspannfeder vorgesehen ist, die beim seitlichen Wegkippen des Verschlußteiles gespannt wird, ist sichergestellt, daß bei dem Ausüben einer Kraft auf das Hebelgestänge zunächst eine Drehbewegung um die erste Achse stattfindet bis der Anschlag erreicht. Durch diese erste Drehbewegung, wird das Verschlußteil etwa axial angehoben. Wenn der erste Drehpunkt sehr weit von dem Stutzen entfernt liegt, ergibt sich eine nahezu axiale Bewegung. Liegt die Drehachse jedoch näher am Stutzen, so ist die axiale Anhebbewegung mit einer leichten Verschwenkbewegung gekoppelt, was jedoch unschädlich ist. Wenn der Anschlag erreicht ist und die Kraft in Axialrichtung weiter auf das Hebelgestänge wirkt, wird entgegen der Wirkung der Vorspannfeder das Verschlußteil seitlich weggekippt.

Der erfindungsgemäße Verschluß eignet sich insbesondere für Kraftstoffbehälter, bei denen der Stutzen von einem Aufbau umschlossen ist, der einen Einführkanal für eine Kraftstoffzapfpistole aufweist. Bei solchen Behälterverschlüssen besteht das Problem, daß sich während der Zeit, in der der Verschluß geschlossen ist, Schmutzwasser rings um die Mündung ansammelt. Nach einer vorteilhaften Weiterbildung der Erfindung ist vorgesehen, daß der Aufbau Ablauföffnungen aufweist, die dann verschlossen sind, wenn das Verschlußteil aus seinem Verschlußsitz abgehoben und seitlich weggekippt ist. Somit kann das Schmutzwasser ablaufen, solange der Verschluß geschlossen ist. Beim Betanken des Kraftfahrzeuges, d.h. wenn der Verschluß geöffnet ist, kann durch die Ablauföffnungen, die wie oben erwähnt geschlossen werden, keine Falschluft in das Gasabsaugsystem der Zapfpistole gezogen werden. Vielmehr gelangen in das Gasabsaugsystem der Zapfpistole nur die durch das Einfüllen des Kraftstoffes aus dem Kraftstoffbehälter verdrängten Dämpfe.

Die Erfindung wird im folgenden an Hand der in den Figuren schematisch dargestellten Ausführungsbeispiele näher erläutert. Es zeigt:
- Figur 1.:: Einen Kraftstoffbehälterverschluß, der auf dem Einfüllstutzen eines Kraftfahrzeuges angeordnet ist.
- Figur 2.:: Den Kraftstoffbehälterverschluß wie in Figur 1, jedoch mit geöffnetem Verschlußteil.
- Figur 3.:: Einen Rohrstutzen mit Dichtung und Führungskulisse im Aufriß.
- Figur 4.:: Das Verschlußteil aus Figur 1 im Aufriß.
- Figur 5.:: Das Verschlußteil mit Bügel und Betätigungshebel in der Seitenansicht.
- Figuren 6 bis 8.:: Das auf dem Stutzen angeordnete Verschlußteil in verschiedenen Phasen der Öffnungsbewegung.
- Figur 9.:: Eine Ausführungsvariante eines Kraftstoffbehälterverschlusses bei geschlossener Verschlußklappe, teilweise im Längsschnitt und teilweise im Aufriß.
- Figur 10.:: Den Kraftstoffbehälterverschluß gemäß Figur 9, jedoch bei geöffnetem Verschlußteil.
- Figur 11 bis 13.:: Einen Behälterverschluß mit einem Hebelgestänge in verschiedenen Phasen der Öffnungbewegung.

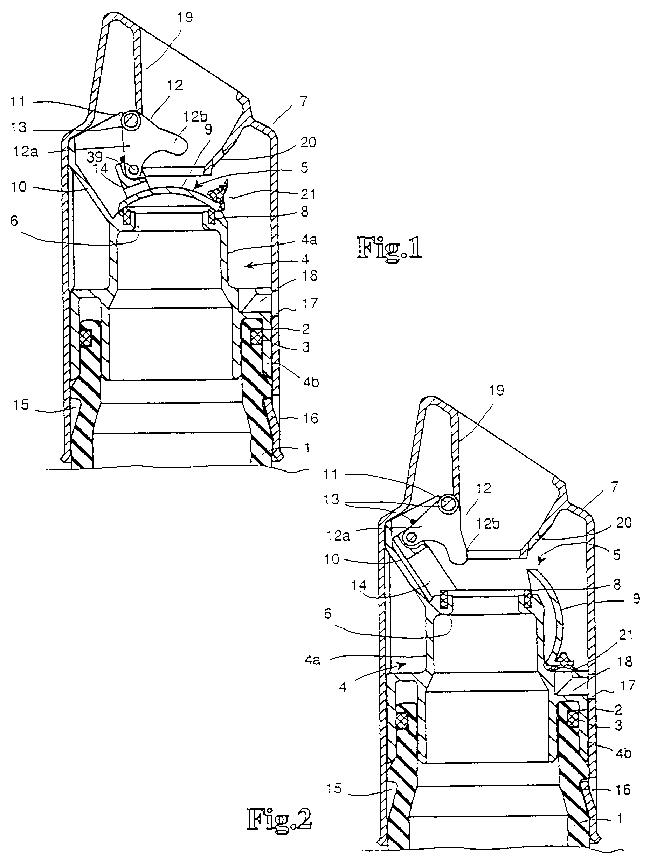

Figur 1 zeigt im Axialschnitt einen Kraftstoffbehälterverschluß gemäß der Erfindung, der auf dem Einfüllrohr 1 angeordnet ist, das zum Kraftstoffbehälter eines Fahrzeuges führt. Das Einfüllrohr 1 weist an seinem freien Ende eine umlaufende Nut 2 auf, in der ein O-Ring 3 sitzt.

Der Kraftstoffbehälterverschluß gemäß der Erfindung besteht aus zwei Hauptteilen, nämlich einem Stutzen 4, der eine durch ein Verschlußteil 5 verschließbare Mündung 6 aufweist, und einem zylinderischen Aufbau 7.

Der Stutzen 4 ist im wesentlichen zylinderförmig und weist an seinem dem Einfüllrohr 1 zugewandten Ende einen ringförmigen, auf das freie Ende des Einfüllrohres passenden Aufnahmeraum auf, der das freie Ende des Einfüllrohres 1 innen und außen umschließt. Der bereits erwähnte O-Ring 3 sorgt für eine gas-und flüssigkeitsdichte Verbindung zwischen den beiden Teilen. Der Außendurchmesser des Stutzens ist an seinem zur Mündung 6 gelegenen Teil 4a wesentlich kleiner als an seinem dem Einfüllrohr 1 zugewandten Teil 4b, das das Einfüllrohr 1 außen umschließt.

Die Wand des Stutzens 4 ist im Bereich seiner Mündung verstärkt, und in der verstärkten Wand ist eine zur Stirnseite hin offene kreisrunde umlaufende Nut gefertigt, die eine Dichtung 8 aufnimmt. Die Dichtung 8 steht an der Stirnseite des Mündungsrandes vor und dient als Verschlußsitz für das Verschlußteil 5, das eine kugelkalottenförmige Haube 9 aufweist. Im Mündungsbereich des Stutzens ist an einer Seite (in Figur 1 links) eine Stützwand 10 angeformt, in der U-förmige Ausnehmungen vorgesehen sind, die zur Aufnahme einer Welle 11 dienen. An der Welle 11 ist ein Winkelhebel 12 angeordnet, der zwei Hebelarme 12a und 12b aufweist und der durch eine auf der Welle 11 sitzende Torsionsfeder 13 vorgespannt ist. Der Arm 12a des Winkelhebels 12 ist über ein Gelenk 39 mit einem Bügel 14 verbunden, der das Verschlußteil 5 an zwei Seiten (in der Zeichnung vor und hinter der Zeichenebene) umschließt. Der Winkelhebel 12 und der Bügel 14 sind mit dem Verschlußteil so verbunden, daß durch Verschwenken des Winkelhebels 12 die kalottenförmige Haube 9 von der Dichtung 8 abgehoben und in den seitlichen Freiraum zwischen dem Stutzen 4 und der Wand des Aufbaus 7 verschwenkt werden kann. In der in Figur 1 gewählten Schnittdarstellung sind die Teile hierfür jedoch nicht erkennbar und die Funktion wird später im Detail beschrieben.

In der in Figur 1 gezeigten Position wird durch den über die Torsionsfeder 13 vorgespannten Winkelhebel 12 auf den Bügel 14 eine Kraft in Richtung auf die Mündung 6 ausgeübt, die von dem Bügel 14 auf das Verschlußteil 5 übertragen wird und dieses fest gegen die Dichtung 8 drückt. Da der Hebelarm 12a zur Längsachse des Bügels 14 einen nahe bei 180° liegenden Winkel einschließt, wird auf den Bügel 14 eine große Kraft ausgeübt, die für ein festes Anpressen der Haube 9 gegen die Dichtung 8 ausgenützt werden kann.

Der bereits kurz erwähnte Aufbau 7 ist im Grobumriß zylinderförmig und umschließt sowohl das Einfüllrohr 1 als auch den Stutzen 4. Das Einfüllrohr 1 ist mit einer Einrastnut 15 versehen, in die Einrastklinken 16 des Aufbaues 7 eingreifen und eine feste Verbindung zwischen dem Einfüllrohr 1 und dem Aufbau 7 herstellen. Der Aufbau 7 ist an einer Seite mit einer Ablauföffnung 17 versehen, die mit einer entsprechenden Radialbohrung 18 im Stutzen 4 zur Deckung kommt. Die Bohrung 18 weist eine Abwinkelung auf, sodaß sie in den Raum zwischen dem mündungsseitigen Teil des Stutzens 4 und dem Aufbau 7 in Axialrichtung mündet und Flüssigkeit, die sich in dem Ringraum zwischen dem Stutzen 4 und dem Aufbau 7 ansammeln könnte über die Bohrung 18 und die Ablauföffnung 17 nach außen geleitet werden kann. Der Aufbau 7 ist an seinem dem Einfüllrohr 1 abgewandten Ende nach innen umgestülpt und bildet ein trichterförmiges Führungsrohr 19 für die Einführung einer Zapfpistole. Das Führungsrohr 19 weist an einer Seite einen Längsschlitz auf, durch den der Winkelhebel 12, insbesondere der zweite Arm 12b des Winkelhebels 12, in den Innenraum des Führungsrohres 19 hineinragt. In der Seitenwand des Führungsrohres 19 ist eine Bohrung 20 vorgesehen, durch die beim Betanken verdrängte Gase aus dem Kraftstonbehälter nach außen treten können.

Figur 2 zeigt den Kraftstoffbehälterverschluß bei geöffnetem Verschlußteil 5. Durch Einführen einer Zapfpistole in das Führungsrohr 19 wird auf den Arm 12b des Winkelhebels 12 eine Kraft ausgeübt und der Winkelhebel wird gegen die Wirkung der Torsionsfeder gedreht, sodaß der erste Arm 12a des Winkelhebels 12 sich von dem Mündungsrand des Stutzens 4 entfernt und den Bügel 14 in entsprechender Weise verschiebt.

Die Bewegung wird - wie weiter unten im Detail erläutert wird - auf das Verschlußteil 5 übertragen, das dadurch zunächst ein kurzes Stück in etwa Axialrichtung von seinem Dichtsitz abgehoben und zur Seite weggekippt wird, bis es die in Figur 2 gezeigte Stellung einnimmt, bei der die Haube 9 an der Außenseite des Stutzens 4 liegt. Eine am Rand der Haube 9 angeordnete Dichtung 21 legt sich dabei am Rand der Bohrung 18 an und verschließt die Bohrung und somit die Ablauföffnung 17. Die engste Stelle des trichterförmigen Führungsrohres 19 ist so bemessen, daß eine Zapfpistole eng umschlossen wird. Gasdämpfe, die aus dem Kraftstoffbehälter beim Befüllen verdrängt werden, können dann über die Bohrung 20 austreten und von den Absaugöffnungen des Gasabsaugssystems der Zapfpistole aufgesaugt werden. Dadurch, daß die Ablauföffnung 17 durch die Dichtung 21 bei geöffnetem Verschlußteil 5 verschlossen ist, wird keine "Falschluft" durch das Gasabsaugsystem angesaugt, vielmehr werden lediglich die aus dem Kraftstoffbehälter verdrängten Dämpfe aufgenommen.

Beim Zurückziehen der Zapfpistole nach dem Befüllen des Kraftstoffbehälters wird der Winkelhebel 12 durch die Wirkung der Torsionsfeder 13 zurück in die in Figur 1 gezeigte Stellung geschwenkt, wodurch der Bügel 14 in Richtung auf den Stutzen 4 verschoben wird, was zum Zurückklappen des Verschlußteiles 5 führt, wobei das Verschlußteil zunächst zurückgekippt und dann näherungsweise in Axialrichtung auf die Dichtung 8 an der Mündung des Stutzens 4 gepreßt wird. Die Schließkraft ist progressiv, da die auf den Bügel 14 ausgeübte Kraft in dem Maße ansteigt, in dem sich der Winkel zwischen der Längsachse des Bügels und dem Hebel 12a 180° annähert. Das Zusammenwirken zwischen dem Verschlußteil 5 und dem Bügel 14 wird nachfolgend erläutert:

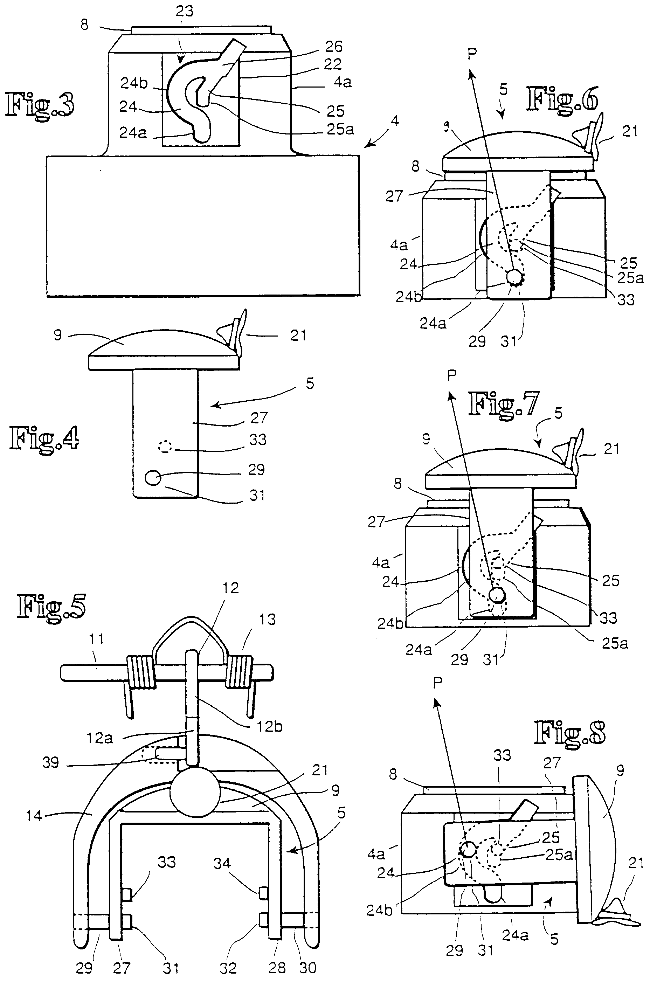

In Figur 3 ist der Stutzen 4 im Aufriß gezeigt. An der die Mündung aufweisenden Stirnseite des Stutzens 4 ist die umlaufende Dichtung 8 zu erkennen. In dem Teil 4a des Stutzens 4, das den kleineren Durchmesser aufweist, ist an zwei sich gegenüberliegenden Seiten eine rechteckige Abflachung 22 vorgesehen. Im Bereich dieser Abflachung ist eine Führungskulisse 23 eingefräst. Eine in der Form identische Führungskulisse ist an der anderen Seite des Stutzens 4 vorhanden, die in der Zeichnung exakt "unter" der Führungskulisse 23 liegt und mit dieser deckungsgleich ist. Da ihre Funktion dieselbe ist wie die der Führungskulisse 23 wird nachfolgend nur die Führungskulisse 23 beschrieben. Die Führungskulisse 23 besteht im wesentlichen aus zwei Nuten 24 und 25. Beide Nuten weisen einen kurzen geradlinigen in Axialrichtung verlaufenden Abschnitt 24a beziehungsweise 25a auf. Bei der ersten Nut 24 schließt an den geradlinig verlaufenden Abschnitt 24a in Richtung auf die Mündung des Stutzens 4 hin ein kreisbogenförmiger Abschnitt 24b an, dessen Kreismittelpunkt in der Nähe des mündungseitig gelegenen Endes des geradlinig verlaufenden Abschnitts 25a der Nut 25 liegt. Die beiden Nuten 24 und 25 laufen zu einem Einfädelungsabschnitt 26 zusammen.

Die Form des Verschlußteiles 5 geht aus den Figuren 4 und 5 hervor. Das Verschlußteil 5 besteht wie bereits erläutert aus einer kalottenförmigen Haube 9, an deren Außenumfang zwei sich in Axialrichtung erstreckende Streben 27 und 28 angeordnet sind.

An der nach außen weisende Seite der Streben 27 und 28 sind Außenzapfen 29 und 30 angeordnet, die (siehe Figur 5) in entsprechende Bohrungen des Bügels 14 eingreifen und eine Gelenkverbindung mit dem Bügel 14 herstellen. Sie dienen als Kraflaufnahmeteil, über das die auf den Bügel ausgeübte Kraft auf das Verschlußteil 5 übertragen wird. Der Bügel 14 ist über das Gelenk 39 mit dem Arm 12a des Winkelhebels 12 in Verbindung, wie aus Figur 5 deutlich wird. An den Innenseiten der Streben 27 und 28 stehen Innenzapfen 31 und 32 sowie 33 und 34 vor. Der Innenzapfen 31 liegt koaxial zu dem Außenzapfen 29, während der Innenzapfen 32 koaxial zu dem Außenzapfen 30 liegt. In Figur 4 ist der Innenzapfen 33 strichliert eingezeichnet, da er durch die Strebe 27 verdeckt ist. Der Innenzapfen 31 befindet sich in der Zeichenebene "unterhalb" des Außenzapfens 29. Beim Zusammenbau der Vorrichtung werden die Innenzapfen 31 und 33 über die Einfädelungsnut 26 in die Nuten 24 und 25 (siehe Figur 3) eingeführt. Das gleiche gilt für die Innenzapfen 32 und 34, die in die entsprechende Führungskulisse (nicht zu sehen) an der gegenüberliegende Seite des Stutzens 4 einlaufen. Die Lage der Innenzapfen 31 und 33 auf der Strebe 27 ist so gewählt, daß sie etwa der Relativlage der geschlossenen Enden der Nutabschnitte 24a und 25a entspricht.

Figur 6 zeigt den Zustand, in dem das Verschlußteil 5 auf den mündungsseitigen Teil 4a des Stutzens 4 aufgesetzt ist. Der Innenzapfen 33 liegt in der Nähe des Endes des Nutabschnittes 25a, während der (in der Zeichnung durch den Außenzapfen 29 verdeckte) Innenzapfen 31 in der Nähe des Endes des Nutabschnittes 24a liegt. In dieser Position liegt die Kugelkalotte 9 mit ihrer Unterseite an der Dichtung 8 an. Wenn über den Bügel 14, der in Figur 6 aus Gründen der Übersichtlichkeit weggelassen ist, eine Kraft entgegen der Richtung des Pfeiles P auf den Außenzapfen 29 ausgeübt wird, wird die Kalotte 9 in Axialrichtung gegen ihren Dichtsitz gepreßt.

Wenn die Kraftrichtung sich umkehrt, d.h. wenn in Richtung des Pfeiles P über den Bügel 14 an dem Außenzapfen 29 gezogen wird, bewegen sich die Innenzapfen 31 und 33 parallel in Axialrichtung, da sie durch die Nutabschnitte 24a beziehungsweise 25a geführt werden. Infolgedessen hebt sich die Kalotte 9 in Axialrichtung von ihrem Dichtsitz ab, wie dies aus Figur 7 hervorgeht. Wenn auf den Außenzapfen 29 weiter eine Kraft in Richtung des Pfeiles P ausgeübt wird, läuft der Zapfen weiter in dem kreisbogenförmigen Nutabschnitt 24b um, während der Zapfen 33 in der in Figur 7 gezeigten Position in etwa verbleibt. Dies führt zu einer Schwenkbewegung des Verschlußteiles um den Zapfen 33. Das Ergebnis der Bewegung ist in Figur 8 dargestellt. Die Kugelkalotte 9 ist an die Außenseite des Stutzens 4 geschwenkt und gibt die Mündung frei.

Wenn die auf den Außenzapfen 29 ausgeübte Kraft umgekehrt wird, d.h. entgegen der Pfeilrichtung wirkt, kehrt sich die Bewegung um, sodaß ausgehend von dem in Figur 8 gezeigten Zustand wieder über den in Figur 7 gezeigten Zustand der Zustand gemäß Figur 6 erreicht wird, bei dem die Kalotte 9 auf der Dichtung 8 aufliegt und die Mündung verschließt.

Die Innenzapfen 31 und 33 stellen im Zusammenwirken mit den Nuten 24 und 25 eine Kulissenführung dar.

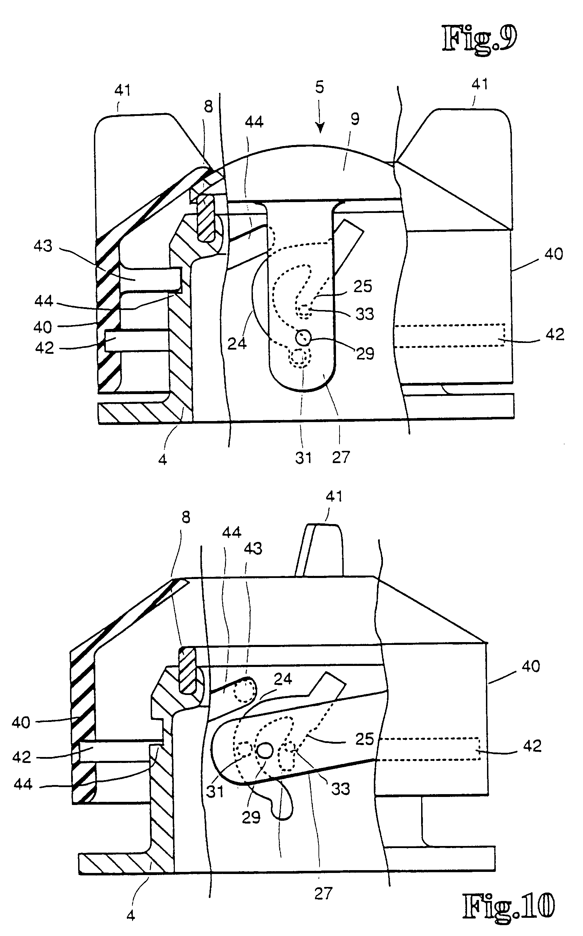

In Figur 9 ist eine weitere Ausführungsform der Erfindung dargestellt. Der in Figur 9 gezeigte Verschluß unterscheidet sich von dem vorstehend erläuterten im wesentlichen dadurch, daß die Öffnungs- und Schließbewegung des Verschlußteiles 5 durch Drehen eines Drehringes 40 gesteuert wird. Der Verschluß ist im linken Teil der Figur 9 in Axialschnittdarstellung gezeigt. Es ist ein Stutzen 4 zu erkennen, der an seiner Mündungsseite stirnseitig eine Dichtung 8 aufweist. Eine kalottenförmige Verschlußhaube 9, die Teil eines Verschlußteiles 5 ist, lastet mit ihrem Unterteil auf der Dichtung 8. Der Stutzen 4 ist konzentrisch von dem Drehring 40 umgeben, der an seiner Oberseite zwei um 180° versetzt angeordnete Flügel 41 aufweist. An der Innenwand des Drehringes 40 ist eine umlaufende Nut 42 angeordnet, die in einer Ebene senkrecht zur Längsachse des Drehringes liegt. Desweiteren sind an der Innenseite des Drehringes 40 drei radial nach innen gerichtete Stifte angeordnet, von denen in der Darstellung der Figur 1 nur einer, nämlich der Stift 43 zu erkennen ist. Die beiden anderen nicht zu erkennenden Stifte sind jeweils um ca. 120° versetzt angeordnet.

Der Stift 43 greift in eine Nut 44 ein, die an der Außenwand des Stutzens 4 gefertigt. Die Nut 44 verläuft schraubenförmig und sie weist eine Umfangslänge von ca. 70° auf. Die erwähnten zwei weiteren Stifte, die dem Stift 43 entsprechen, greifen in entsprechende schraubenförmige Nuten, die in der Zeichnung nicht zu erkennen sind, ein, die jeweils um ca. 120° versetzt an der Außenwand des Stutzens 4 angeordnet sind. Im zentralen Teil der Figur 9 zwischen den beiden Abbruchlinien ist der Verschluß im Aufriß gezeigt, wobei jedoch der Drehring 40 im mittleren Teil der Zeichnung weggebrochen ist. An der Außenwand des Stutzens 4 ist eine Führungskulisse 23 in Form von zwei Nuten 24 und 25 eingefräst, deren Form im wesentlichen der Form der in Figur 3 gezeigten Nuten entspricht. Das Verschlußteil besteht wiederum aus einer kalottenförmigen Haube 9, an der zu beiden Seiten symmetrische Streben angeordnet sind. Die Strebe 27 weist einen nach außen gerichteten Zapfen 29 als Kraftaufnahmeteil und jeweils zwei nach innen gerichtete Zapfen 31 und 33 auf, die in die Nuten 24 und 25 eingreifen. Mit der Ausnahme, daß der als Kraftaufnahmeteil wirkende Außenzapfen 29 im Gegensatz zu dem in die Figuren 3 bis 8 dargestellten Ausführungsbeispiel nicht mit dem Innenzapfen 31 fluchtet, ist der Aufbau des Verschlußteiles und der Führungskulisse an dem Stutzen 4 identisch zu dem Aufbau wie er oben an Hand der Figuren 3 bis 8 erläutert worden ist. Damit ergibt sich auch die gleiche Öffnungsbewegung, nämlich zunächst ein geringes etwa axiales Anheben des Verschlußteiles 5 und danach ein seitliches Wegkippen, wie dies insbesondere in den Figuren 6 bis 8 gezeigt worden ist.

Im Gegensatz zu der an Hand der Figuren 3 bis 8 beschriebenen Ausführungsform läuft der als Kraftaufnahmeteil wirkende Außenzapfen 29 in der umlaufenden Ringnut 42 des Drehringes 40. Wenn an dem Drehring 40 mit Hilfe der Flügel 41 im Gegenuhrzeigersinn gedreht wird, bewegt sich der Stift 43 in der ansteigenden Nut 44, sodaß der Drehring 40 in Axialrichtung verschoben wird. Da außer dem Stift 43 und der Nut 44 rotationssymetrisch jeweils um 120° versetzt zwei weitere Stifte und entsprechende Nuten vorgesehen sind, wird der Drehring 40 präzise sowohl hinsichtlich der Drehbewegung als auch hinsichtlich der axialen Verschiebung geführt.

Das Ergebnis der Drehbewegung ist in Figur 10 dargestellt. Nach einer Drehung um ca. 70° ist der Stift 43 in der Nut 44 bis zu deren Ende gelangt. Dadurch hat sich der Drehring 40 nach Art einer Schraube axial in Richtung auf die Mündung des Stutzens 4 verschoben. Da der als Kraftaufnahmeteil wirkende Außenzapfen 29 an der Strebe 27 (und entsprechend der nicht zu erkennende Zapfen an der entgegengesetzt liegenden Strebe) in der Umfangsnut 42 geführt ist, wird auf die Außenzapfen eine exakt in Axialrichtung wirkende Kraft ausgeübt.

Wie in Figur 10 zu erkennen ist, gelangt die Spitze des Stiftes 43 in die in Figur 10 strichliert eingezeichnete Position, die ebenfalls mit 43 bezeichnet ist. Wie ebenfalls aus Figur 10 hervorgeht, wird infolge der auf den Außenzapfen 29 ausgeübten axialen Schubkraft durch die Wirkung der Kulissenführung 23 die Strebe 27 zunächst in Axialrichtung angehoben und danach seitlich verschwenkt, sodaß das Verschlußteil die gleiche Bewegung, wie in den Figuren 6, 7 und 8 gezeigt, ausführt.

Zum Schließen des Verschlusses wird an dem Drehring 40 im Uhrzeigersinn gedreht, sodaß die Bewegung in entgegengesetzter Reihenfolge abläuft. Am Ende der Drehung wird über den Außenzapfen 29 auf die Strebe 27 und somit die Haube 9 eine Kraft in Axialrichtung ausgeübt, mit der die Haube 9 fest gegen die Dichtung 8 gepreßt werden kann. Die Nut 44 - und entsprechend die weiteren nicht gezeigten rotationssymmetrisch angeordneten Nuten - können gekrümmt sein, um eine progressive oder degressive Kraftcharakteristik zu erzielen. An dem Ende der Nuten kann auch eine Einrastschwelle vorgesehen sein, die gewährleistet, daß der Stift 43 an derjenigen Position in der Nut 44 arretiert wird, die ein festes Anpressen des Verschlußteiles 5 gewährleistet. Beim Lösen des Verschlusses muß die Einrastschwelle überwunden werden, was ohne weiteres möglich ist.

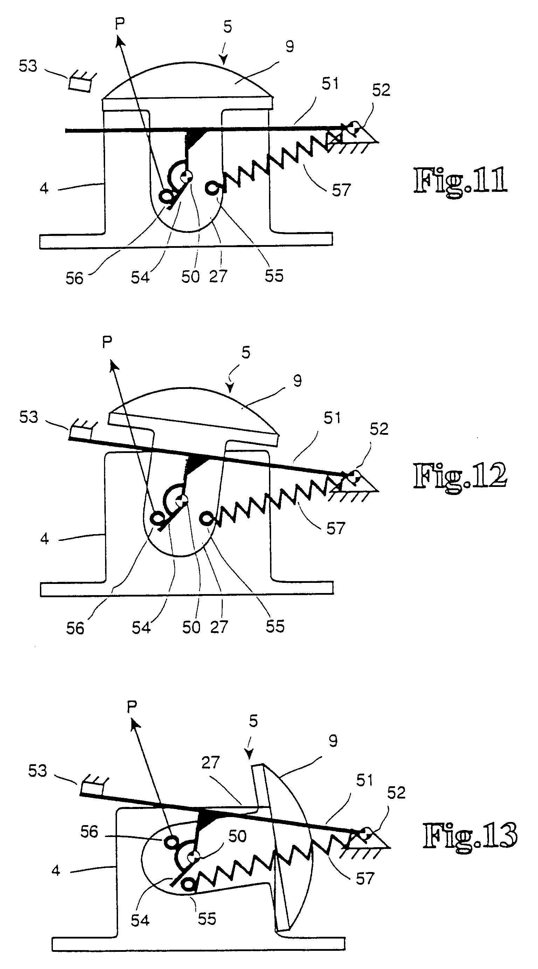

Eine weitere Ausführungsvariante gemäß der Erfindung wird nachfolgend an Hand der Figuren 11 bis 13 erläutert. Der dort gezeigte Verschlußmechanismus eignet sich sowohl für Verschlüsse, die über einen Winkelhebel, wie in Figur 1 gezeigt, als auch für Verschlüsse, die über einen in Figur 9 gezeigten Drehring, bedient werden. In den Figuren 11 bis 13 ist daher nur der zum vorhergehenden unterschiedliche Verschlußmechanismus beschrieben. In Figur 11 ist wiederum ein Stutzen 4 zu erkennen, der durch ein Verschlußteil 5 verschließbar ist. Das Verschlußteil 5 besteht wiederum aus einer kalottenförmigen Haube 9 mit zwei beidseitig symmetrisch angeordneten Streben, von denen in Figur 11 nur eine, nämlich die Strebe 27 zu erkennen ist. Die Strebe 27 ist über eine Achse 50 drehbar mit einem Hebelgestänge 51 verbunden. Das gleiche gilt für die auf der anderen Seite des Ansatzes 4 liegende Strebe, die im folgenden daher nicht weiter erwähnt wird. Das Hebelgestänge 51 ist außerhalb des Stutzens 4 in einem Lager 52 drehbar gelagert. Ein Anschlag 53 auf der dem Lager 52 gegenüberliegenden Seite begrenzt die Bewegung des Hebelgestänges 51. Durch einen Seitenhebel 54, der mit dem Hebelgestänge 51 fest verbunden ist, und zwei Anschlagzapfen 55 und 56, die auf der Strebe 27 angeordnet sind, wird die Drehbewegung der Strebe 27 in Bezug auf das Hebelgestänge 51 nach beiden Richtungen begrenzt. Durch eine Zugfeder 57, die an dem außerhalb des Stutzens 4 liegenden Lager 52 und andererseits an der Strebe 27 befestigt ist, wird die Strebe 27 in Drehrichtung so vorgespannt, daß der Zapfen 56 an dem Seitenhebel 54 des Hebelgestänges 51 anschlägt. Dabei nimmt das Verschlußteil 5 die Position ein, bei der die Mündung des Stutzens 4 durch das Verschlußteil 5 verschlossen ist.

Wenn nun auf den Zapfen 56 näherungsweise in Axialrichtung in Richtung auf die Mündung des Stutzens 4 eine Kraft ausgeübt wird (Pfeil P), so wird die aus dem Verschlußteil 5 und dem Hebelgestänge 51 bestehende Anordnung um den Drehpunkt des Lagers 52 geschwenkt. Da der Drehpunkt relativ weit außerhalb des Stutzens 4 liegt, wird das Verschlußteil 5 etwa in Axialrichtung von seinem Verschlußsitz abgehoben. Je weiter das Lager 52 von dem Stutzen entfernt ist, um so mehr nähert sich die Bewegung einer reinen Axialbewegung. In der Praxis erfolgt - wie in Figur 12 gezeigt - jedoch eine leichte Schwenkbewegung des Verschlußteiles 5, was jedoch für den Betrieb des Verschlusses unschädlich ist, sofern die Verschwenkung um einen Punkt erfolgt, der außerhalb des Stutzens 4 liegt.

Die in Figur 12 gezeigte Phase der Öffnungsbewegung wird dadurch begrenzt, daß das Hebelgestänge 51 an dem Anschlag 53 anschlägt. Wenn in Richtung des Pfeiles P oder in Axialrichtung weiter eine Kraft auf den Zapfen 56 ausgeübt wird, wird die Strebe 27 und die mit ihr verbundene Haube 9 geschwenkt, sodaß die Haube 9 an der Seite des Stutzens 4 ankommt, wie dies in Figur 13 gezeigt ist. Da diese Bewegung entgegen der Kraft der Zugfeder 57 ausgeübt werden muß, wird sie erst dann eingeleitet, wenn - wie erwähnt - das Hebelgestänge 51 an dem Anschlag 53 anschlägt.

Wenn die Richtung der Kraft umgekeht wird, d.h. wenn die Kraft entgegen der Richtung des Pfeiles P wirkt, verläuft die Bewegung in umgekehrter Reihenfolge, d.h. durch die Wirkung der Feder 57 wird das Verschlußteil um die Drehachse 50 zurück verschwenkt, wonach sich das Hebelgestänge von dem Anschlag 53 entfernt und schließlich die in Figur 11 gezeigte Position wieder einnimmt.

## Patentansprüche

1. Verschluß zum Verschließen der Mündung (6) eines Stutzens (4), mit einem Verschlußteil (5), das sich von seinem Verschlußsitz entfernen läßt, **dadurch gekennzeichnet**, daß eine Zwangsführung für das Verschlußteil (5) vorgesehen ist, durch die das Verschlußteil (5) so geführt ist, daß es beim Öffnungsvorgang in einer ersten Phase des Öffnungsvorgangs in annähernd axialer Richtung des Stutzens (4) von seinem Verschlußsitz abhebt und in einer daran anschließenden zweiten Phase des Öffnungsvorgangs um eine quer zur Langsrichtung des Stutzens (4) liegende Schwenkachse, die im Bereich des Stutzens (4) oder dessen axialer Verlängerung liegt, verschwenkt wird.

2. Verschluß nach Anspruch 1, dadurch gekennzeichnet, daß die Zwangsführung mindestens eine Kulissenführung ist, die zwei komplementäre Teile, nämlich einerseits Nuten (24, 25) und andererseits in die Nuten eingreifende Zapfen (31, 32, 33, 34) aufweist.

3. Verschluß nach Anspruch 2, dadurch gekennzeichnet, daß die Kulissenführung zwei Nuten (24, 25) aufweist, in die jeweils Führungszapfen (31, 32) eingreifen, und daß beide Nuten (24, 25) jeweils einen etwa axial geradlinig verlaufenden Abschnitt (24a, 25a) und eine (24) der beiden Nuten einen an den axial verlaufenden Abschnitt (24a) anschließenden kreisbogenförmigen Abschnitt (24b) aufweisen.

4. Verschluß nach Anspruch 3, dadurch gekennzeichnet, daß die beiden Nuten (24, 25) in einen Einfädelungsnutabschnitt (26) zusammenlaufen.

5. Verschluß nach einem der Ansprüche 2 bis 4, dadurch gekennzeichnet, daß das Verschlußteil eine auf den Verschlußsitz passende Kappe (9) und zwei seitlich an der Kappe (9) angeordnete, sich in Axialrichtung erstreckende Streben (27, 28) aufweist, die den Stutzen (4) gabelförmig beidseitig umschließen.

6. Verschluß nach Anspruch 5, dadurch gekennzeichnet, daß jeweils ein Teil der Kulissenführung an der Außenwand des Stutzens (4) und das dazu jeweils komplementäre Teil an der zum Stutzen weisenden Innenseite einer jeden Strebe (27, 28) angeordnet ist.

7. Verschluß nach Anspruch 5 oder 6, dadurch gekennzeichnet, daß an der Strebe oder an den Streben ein Kraftaufnahmeteil (29, 30) angeordnet ist, auf das Kräfte etwa in Axialrichtung zum Schließen und Öffnen des Verschlusses ausübbar sind.

8. Verschluß nach Anspruch 7, dadurch gekennzeichnet, daß an dem Kraftaufnahmeteil (29, 30) ein Bügel (14) angelenkt ist, der mit einem Betätigungshebel (12) verbunden ist.

9. Verschluß nach Anspruch 8, dadurch gekennzeichnet, daß der Betätigungshebel in einem Einführkanal (19) so angeordnet ist, daß er durch Einführen einer Zapfpistole betätigbar ist.

10. Verschluß nach Anspruch 7, dadurch gekennzeichnet, daß das Kraftaufnahmeteil (29, 30) mit einem axial beweglichen Außenring (40) verbunden ist.

11. Verschluß nach Anspruch 10, dadurch gekennzeichnet, daß das Kraftaufnahmeteil ein Zapfen (29) ist, der in eine umlaufende Nut (42) des axial beweglichen Außenringes eingreift.

12. Verschluß nach Anspruch 10 oder 11, dadurch gekennzeichnet, daß der Stutzen (4) eine Schraubkulisse (43, 44) aufweist, derart daß er durch Drehung in axialer Richtung bewegbar ist.

13. Verschluß nach Anspruch 12, dadurch gekennzeichnet, daß die Schraubkulisse aus zwei komplementären Teilen, einerseits aus Nuten (44) und anderereits aus in die Nuten eingreifenden Stiften (43) besteht.

14. Verschluß nach Anspruch 12 oder 13, dadurch gekennzeichnet, daß das eine Teil der Schraubkulisse an der Außenseite des Stutzens (4) und das dazu komplementäre Teil an der Innenseite des Außenringes (40) angeordnet ist.

15. Verschluß nach Anspruch 1, dadurch gekennzeichnet, daß die Zwangsführung ein Hebelgestänge (51) aufweist.

16. Verschluß nach Anspruch 15, dadurch gekennzeichnet, daß das Hebelgestänge (51) zwei Drehachsen aufweist, deren erste ein ortsfestes Lager (52) des Hebelgestänges (51) darstellt und seitlich im Abstand zu dem Stutzen (4) liegt und deren zweite der Anlenkpunkt des Verschlußteils ist und diametral durch den Stutzen verläuft, derart daß ein Verschwenken des Hebelgestänges (51) um die erste Drehachse (52) ein näherungsweises axiales Anheben des Verschlußteiles (5) und ein Verschwenken des Verschlußteiles um die zweite Achse (50) ein seitliches Wegkippen des Verschlußteiles (5) zur Außenseite des Stutzens (4) bewirkt.

17. Verschluß nach Anspruch 16, dadurch gekennzeichnet, daß die Drehbewegung um die erste Drechachse (52) durch einen Anschlag (53) begrenzt ist.

18. Verschluß nach Anspruch 17, dadurch gekennzeichnet, daß eine Vorspannfeder (57) vorgesehen ist, die beim seitlichen Wegkippen des Verschlußteiles (5) gespannt wird.

19. Verschluß nach Anspruch 1 für einen Kraffstoffbehälter, bei dem der Stutzen (4) von einem Aufbau (7) umschlossen ist, der einen Einführkanal (19) für eine Krattstoffzapfpistole aufweist, dadurch gekennzeichnet, daß der Aufbau (7) eine Ablauföffnung aufweist, die bei seitlich weggekipptem Verschlußteil (5) verschlossen ist.

## Claims

1. Closure for closing the mouth (6) of a pipe (4) with a closure member (5), which may be removed from its closure seat, characterised in that a guide is provided for the closure member (5) by which the closure member (5) is so guided that in the opening process it lifts up from its closure seat in approximately the axial direction of the pipe (4) in a first phase of the opening process and is pivoted in a subsequent second phase of the opening process about a pivotal axis which extends transverse to the longitudinal direction of the pipe (4) and is disposed in the region of the pipe (4) or the axial extension thereof.

2. Closure as claimed in claim 1, characterised in that the guide is at least one sliding block guide which has two complementary portions, that is to say grooves (24,25) on the one hand and pegs (31,32,33,34) engaging in the grooves on the other hand.

3. Closure as claimed in claim 2, characterised in that the sliding block guide has two grooves (24,25) in which respective guide pegs (31,32) engage and that the two grooves (24,25) each have a section (24a,25a) which extends in a straight line approximately axially and one (24) of the two grooves has a circular arcuate section (24b) adjacent to the axially extending section (24a).

4. Closure as claimed in claim 3, characterised in that the two grooves (24,25) run together in a merging groove section (26).

5. Closure as claimed in one of claims 2 to 4, characterised in that the closure member has a cap (9) fitting onto the closure seat and two bars (27,28) which extend in the axial direction and which extend around the pipe (4) on both sides in the manner of a fork.

6. Closure as claimed in claim 5, characterised in that one portion of each sliding bar guide is arranged on the outer wall of the pipe (4) and the portion complementary to it is arranged on the inner surface of each bar (27,28) directed towards the pipe.

7. Closure as claimed in claim 5 or 6, characterised in that a force receiving member (29,30) is arranged on the bar or on the bars, on which forces may be exerted approximately in the axial direction for closing and opening the closure.

8. Closure as claimed in claim 7, characterised in that pivotably connected to the force receiving member (29,30) is a yoke (14) which is connected to an actuating lever (12).

9. Closure as claimed in claim 8, characterised in that the actuating lever is so arranged in an insertion passage (19) that it is actuable by insertion of a dispensing nozzle.

10. Closure as claimed in claim 7, characterised in that the force receiving member (29,30) is connected to an axially movable outer ring (40).

11. Closure as claimed in claim 10, characterised in that the force receiving member is a peg (29) which engages in a peripheral groove (42) in the axially movable outer ring.

12. Closure as claimed in claim 10 or 11, characterised in that the pipe (4) has a helical linkage (43,44) such that it is movable in the axial direction by rotation.

13. Closure as claimed in claim 12, characterised in that the helical linkage comprises two complementary portions, grooves (44) on the one hand and pins (43) engaging in the grooves on the other hand.

14. Closure as claimed in claim 12 or 13, characterised in that the one portion of the helical linkage is arranged on the outer surface of the tube (4) and the portion complementary to it is arranged in the inner surface of the outer ring (40).

15. Closure as claimed in claim 1, characterised in that the guide has a lever linkage (51).

16. Closure as claimed in claim 15, characterised in that the lever linkage (51) has two axes of rotation, the first of which represents a fixed mounting (52) of the lever linkage (51) and is situated laterally spaced from the tube (4) and the second of which is the pivot point of the closure member and extends diametrically through the tube such that pivoting of the lever linkage (51) about the first axis of rotation (52) effects an approximately axial lifting up of the closure member (5) and pivoting of the closure member about the second axis (50) effects a lateral tilting of the closure member (5) towards the outer surface of the tube (4).

17. Closure as claimed in claim 16, characterised in that the rotational movement about the first axis of rotation (52) is limited by an abutment (53).

18. Closure as claimed in claim 17, characterised in that a biasing spring (57) is provided which is stressed when the closure member (5) tilts laterally.

19. Closure as claimed in claim 1 for a fuel tank in which the tube (4) is surrounded by a superstructure (7) which has an insertion passage (19) for a fuel dispensing nozzle, characterised in that the superstructure (7) has a drain opening which is closed when the closure member is laterally tilted.

## Revendications

1. Fermeture destinée à fermer un embout (6) d'une tubulure (4), comprenant un élément obturateur (5) pouvant être éloigné de son siège de fermeture, caractérisée en ce qu'un guidage forcé de l'élément obturateur (5) est prévu, qui guide l'élément obturateur (5) de manière telle que, lors d'une opération d'ouverture, pendant une première phase de l'opération d'ouverture, il soit décollé de son siège de fermeture dans un sens à peu près axial par rapport à la tubulure (4), et que, pendant une seconde phase de l'opération d'ouverture, qui suit la première, il soit amené à basculer autour d'un axe de pivotement s'étendant transversalement par rapport au sens longitudinal de la tubulure (4) et situé à proximité de la tubulure (4) ou du prolongement axial de celle-ci.

2. Fermeture selon la revendication 1, caractérisée en ce que le guidage forcé est constitué au moins par un guidage à coulisse comprenant deux éléments complémentaires, à savoir, d'un côté des rainures (24, 25) et de l'autre côté des doigts (31, 32, 33, 34) s'engageant dans les rainures.

3. Fermeture selon la revendication 2, caractérisée en ce que le guidage à coulisse comporte deux rainures (24, 25), dans lesquelles s'engagent respectivement des doigts de guidage (31, 32), et en ce que les deux rainures (24, 25) comportent respectivement une section (24a, 25a) s'étendant en ligne droite à peu près dans le sens axial, et en ce que l'une (24) des deux rainures comporte une section (24b) en forme d'arc de cercle, rejoignant la section (24a) s'étendant dans le sens axial.

4. Fermeture selon la revendication 3, caractérisée en ce que les deux rainures (24, 25) se rejoignent dans une section (26) de rainure d'engagement.

5. Fermeture selon l'une des revendications 2 à 4, caractérisée en ce que l'élément obturateur comporte un capuchon (9) s'adaptant sur le siège de fermeture et deux pattes (27, 28) disposées latéralement sur le capuchon (9) et s'étendant dans le sens axial, embrassant la tubulure (4) des deux côtés de celle-ci à la manière d'une fourche.

6. Fermeture selon la revendication 5, caractérisée en ce que respectivement une partie du guidage à coulisse est aménagée sur la paroi extérieure de la tubulure (4), et en ce que l'élément respectif complémentaire de celle-ci est aménagé à la surface intérieure de chaque patte (27, 28), qui est dirigée vers la tubulure.

7. Fermeture selon la revendication 5 ou 6, caractérisée en ce qu'un élément (29, 30) de réception des efforts est disposé sur la ou les patte(s), sur lequel des efforts peuvent être exercés dans un sens à peu près axial, de manière à fermer et à ouvrir le bouchon.

8. Fermeture selon la revendication 7, caractérisée en ce qu'un étrier (14) est articulé sur l'élément (29, 30) de réception des forces, qui est relié à un levier actionneur (12).

9. Fermeture selon la revendication 8, caractérisée en ce que le levier actionneur est disposé dans le goulot d'engagement (19) de manière telle qu'il puisse être actionné via l'engagement d'un pistolet de remplissage.

10. Fermeture selon la revendication 7, caractérisée en ce que l'élément (29, 30) de réception des efforts est relié à une bague extérieure (40) axialement mobile.

11. Fermeture selon la revendication 10, caractérisée en ce que l'élément de réception des efforts est un doigt (29) qui s engage dans une rainure circonférentielle (42) de la bague extérieure axialement mobile.

12. Fermeture selon la revendication 10 ou 11, caractérisée en ce que la tubulure (4) comporte un système à coulisse à vis (43, 44), de manière à pouvoir être déplacée dans le sens axial par une rotation.

13. Fermeture selon la revendication 12, caractérisée en ce que la coulisse hélicoïdale est composée de deux éléments complémentaires, à savoir, d'un côté de rainures (44) et de l'autre côté de doigts (43) s'engageant dans les rainures.

14. Fermeture selon la revendication 12 ou 13, caractérisée en ce que l'une des parties de la coulisse hélicoïdale est aménagée sur la paroi extérieure de la tubulure (4), et en ce que l'élément respectif complémentaire de celle-ci est aménagé à la surface intérieure de la bague extérieure (40).

15. Fermeture selon la revendication 1, caractérisée en ce que le guidage forcé comporte une timonerie (51).

16. Fermeture selon la revendication 15, caractérisée en ce que la timonerie (51) comporte deux axes de rotation, dont le premier représente un palier stationnaire (52) de la timonerie (51) et se situe latéralement à une distance de la tubulure (4), et en ce que le second est constitué par le point d'articulation de l'élément obturateur et s'étend diamétralement à travers la tubulure, de manière qu'une rotation de la timonerie (51) autour du premier axe de rotation (52) provoque un décollement à peu près axial de l'élément obturateur (5), et qu'une rotation autour du second axe (50) provoque un basculement latéral de l'élément obturateur (5) vers le côté extérieur de la tubulure (4).

17. Fermeture selon la revendication 16, caractérisée en ce que le mouvement de rotation autour du premier axe de rotation (52) est limité par une première butée (53).

18. Fermeture selon la revendication 17, caractérisée en ce qu'un ressort de rappel (57) est prévu, qui se tend lorsque l'élément obturateur (5) bascule sur le côté.

19. Fermeture selon la revendication 1, pour un réservoir de carburant, où la tubulure (4) est entourée par une structure (7) qui présente un canal d'engagement (19) pour un pistolet de remplissage, caractérisée en ce que la structure (7) comporte une ouverture de vidange, qui est fermée lorsque l'élément obturateur (5) est basculé sur le côté.
